# EUROPEAN PATENT APPLICATION

(11) **EP 4 574 542 A1**
(43) Date of publication of application: **25.06.2025**
(21) Application number: 23854137.9
(22) Date of filing: 30.06.2023
(51) Int. Cl.: B60L 53/16, B60L 53/302

(54) **CHARGING TERMINAL**

(30) Priority: 16.08.2022 CN 202210980073
(71) Applicant: Wuhan NIO Energy Co., Ltd., Wuhan, Hubei 430070 (CN)
(72) Inventor: LIN, Qun, Shanghai 201804 (CN); XIA, Lijian, Shanghai 201804 (CN); HUANG, Sichuan, Shanghai 201804 (CN); ZHANG, Yuting, Shanghai 201804 (CN); ZHANG, Haijun, Shanghai 201804 (CN); YUAN, Zhixiong, Shanghai 201804 (CN)
(74) Representative: Vossius & Partner Patentanwälte Rechtsanwälte mbB
(86) International application number: PCT/CN2023/105212
(87) International publication number: WO 2024/037232

(57) **Abstract**

A charging terminal includes: a charging gun (1) provided with a liquid inlet pipe (145) and a liquid return pipe (142) therein; a heat dissipation device (2) provided with an inlet and an outlet, where the inlet is connected to the liquid return pipe (142) via a pipeline; a fan (3) electrically connected to the heat dissipation device (2); a storage device (4) connected to the outlet of the heat dissipation device (2) via a pipeline and configured to store a cooling medium; a conveying device (6) connected to the storage device (4) via a pipeline and configured to convey the cooling medium in the storage device (4) to the liquid inlet pipe (145); and a control device configured to control the fan (3) and the conveying device (6), to enable the cooling medium to dissipate heat from the charging gun (1), so that a continuous current of the charging terminal for charging a target vehicle is greater than 600 amperes.

## Description

### Cross Reference to Related Application

The present application claims the priority to Chinese Patent Application No. CN202210980073.6, filed on August 16, 2022, and entitled "CHARGING TERMINAL", which is incorporated herein by reference in its entirety.

### Technical Field

Embodiments of the invention relate to the technical field of vehicle charging, and particularly to a charging terminal.

### Background Art

New energy electric vehicles are booming in China and other countries, and current energy replenishment for the new energy vehicles is classified into two major categories, that is, battery swapping and charging. The energy replenishment by battery swapping currently can be completed as fast as 3 min, which is comparable to the speed of refueling a fuel vehicle at a filling station. However, for the energy replenishment by charging, current energy replenishment time (from 10% SOC to 90% SOC) generally ranges from 30 min to 10 h, and the energy replenishment time for battery packs with a capacity of 100 KWh or more may be longer. In comparison, there is still a gap of about 10 times between the time of energy replenishment by charging and the time of the energy replenishment by battery swapping and refueling.

With continuous improvement and optimization of new energy batteries and gradual popularization of rechargeable batteries 3C or above, shortening the time for charging new energy electric vehicles by increasing charging currents of battery packs has become the mainstream technical direction of the development in the industry. One of the main challenges in further increasing power and charging currents of supercharging terminals and integrated charging piles lies in heat dissipation designs for charging systems. As prescribed in GB/T 20134.3, the maximum permissible charging current for a charging product provided with no active cooling device should not exceed 250 A. An active cooling device has to be employed to dissipate heat from a charging system if there is a need to further increase the current. Six patent applications CN 109599693 A, CN 109600961 A, CN 110014953 A, CN 207416579 U, CN 110014952 A, and CN 110014955 A filed by the BYD Co., Ltd. all relate to cooling of a wiring terminal, where in the CN 109599693 A, a sealed cavity is provided inside the wiring terminal, and a liquid metal is accommodated in the sealed cavity, so as to cool the wiring terminal. In the patent application US 11084390 B2 filed by the Tesla Inc, a manifold assembly encloses first and second electrical sockets and first and second sleeves, such that the first and second sleeves and the manifold assembly create a hollow interior space therebetween, and a thermally conducting material flows in the interior space to cool a connector. In the patent application US 9321362 B2 filed by the Tesla Inc, a cooling conduit is additionally provided in a charging cable, and the cooling conduit forms a fluid channel surrounding at least one electrical contact of a connector, and forms a fluid channel surrounding the inside of a handle of the connector.

In the patent application DE 102010007975 A1 filed by the Siemens AG, to solve the problem of the life attenuation of a traction battery due to an excessively high temperature during charging, a cooling device is provided inside a charging pile, where a separate cooling cable is connected to a vehicle to be charged, to cool the traction battery in the vehicle. In the patent application US 9527403 B2 filed by the Tesla Inc in 2014, a ground-type charging pile is employed, and a charging port includes a charging connector and a fluid connector, where the charging connector is used for charging a vehicle, and the fluid connector is used for exchanging heat with a vehicle cooling system in response to a heat exchange request from the vehicle. In the patent application US 11052776 B2 filed by the Ford Global Technologies, LLC in 2105, a fan and a chiller are provided inside a charging pile to communicate a cooling airflow across a thermal management component of an electric vehicle, thereby enhancing the cooling of a battery pack of the electric vehicle during a direct current fast charging event. In the patent application US 10913369 B2 filed by the Ford Global Technologies, LLC in 2017, a first loop is provided in a charging pile, and a second loop is provided in a vehicle, where the second loop transfers heat from a traction battery to the first loop, and then the first loop converts the obtained heat into electric energy, to complete the recovery of charging energy. In the patent application US 10770815 B2 filed by the AUDI AG in 2018, a charging pile has a charging plug and a medium plug that are connected to a vehicle, where the medium plug is used for connecting the charging pile to the vehicle, to discharge and introduce a cooling/heating medium, thereby enabling the charging pile to heat/cool the electric vehicle. In the aspect of a separate cooling technology for terminal systems, the patent application CN 107878240 A filed by the Teld New Energy Co., Ltd. sets forth a simple system of separate cooling for a liquid-cooled terminal, where one to four pipes are used for isolated heat dissipation, and a fan and a water pump are used for constant-speed heat dissipation, thereby implementing the charging at a current of 400 A. The patent application CN 209845579 U filed by the Xiaopeng Motors Technology Co., Ltd. sets forth a method for controlling a fan and a water pump, which also implements charging at a large current of 400 A.

In conclusion, for high-power charging technology, the current main bottlenecks are as follows. In terms of heat dissipation designs for components, such as heat dissipation designs for a cable and a plug terminal of a charging gun, currently, only heat dissipation for a continuous charging current of 400 A and a maximum charging current of 600 A can be implemented, and it is impossible to implement heat dissipation for larger continuous charging currents. In terms of heat dissipation designs for systems, charging pile and vehicle integrated liquid cooling technology is ideal. However, in reality, vehicle companies generally will not allow charging piles to manage and control heat dissipation designs for battery packs in vehicles, there are high quality risks in management and control, interfaces and standards lack unity, and different vehicle models have poor compatibility. Therefore, such technology is very difficult to popularize in the market. The separate cooling technology for terminal systems is a good solution, where the cooling of a battery pack is managed and controlled inside a vehicle, and a charging cable is cooled on a charging pile side, resulting in higher compatibility between different vehicle models and different charging terminals. However, the current heat dissipation designs for systems can only implement continuous heat dissipation for a large current of 400 A, and are unable to implement continuous heat dissipation for larger currents.

Therefore, there is an urgent need for a charging terminal that has an improved heat dissipation effect and that is able to realize a larger continuous charging current.

### Summary

In view of the problems mentioned above, the invention provides a charging terminal to overcome or at least partially solve the problems mentioned above.

Embodiments of the invention provide a charging terminal for charging a target vehicle, the charging terminal including: a charging gun provided with a liquid inlet pipe and a liquid return pipe therein; a heat dissipation device provided with an inlet and an outlet, wherein the inlet is connected to the liquid return pipe via a pipeline; a fan electrically connected to the heat dissipation device; a storage device connected to the outlet of the heat dissipation device via a pipeline and configured to store a cooling medium; a conveying device connected to the storage device via a pipeline and configured to convey the cooling medium in the storage device to the liquid inlet pipe; at least five temperature sensors disposed at a DC+ terminal of the charging gun, a DC- terminal of the charging gun, a liquid outlet of the heat dissipation device, a liquid inlet of the heat dissipation device, and an air inlet of the fan, respectively; and a control device configured to receive data from the temperature sensors and control the operations of the conveying device and the fan, to enable the cooling medium to cool the charging gun, so that a continuous current of the charging terminal for charging the target vehicle is greater than 600 amperes.

Optionally, a maximum current of the charging terminal for charging the target vehicle is greater than 650 amperes.

Optionally, the temperature sensors are configured to measure a temperature T1 of the DC+ terminal of the charging gun, a temperature T2 of the DC- terminal of the charging gun, a temperature T3 of an oil inlet of a gun cable, a temperature T4 of an oil outlet of the gun cable, and a temperature T5 of the air inlet of the fan, respectively.

Optionally, the operation of the conveying device is controlled based on ΔT and/or a current operating state of the charging terminal, where ΔT = T4 - T3.

Optionally, when the charging terminal starts charging, the conveying device is controlled to be turned on; and when the charging terminal stops charging and ΔT ≤ 1°C, the conveying device is controlled to be turned off.

Optionally, the conveying device is a pump, a rotational speed of the pump is divided into three levels in an ascending order, and when the rotational speed of the pump is at the first level and ΔT ≥ 7°C, the rotational speed of the pump is increased to the second level; when ΔT ≥ 12°C, the rotational speed of the pump is increased to the third level; and vice versa.

Optionally, the operation of the fan is controlled based on the temperature T1 of the DC+ terminal of the charging gun, the temperature T2 of the DC- terminal of the charging gun, the temperature T5 of the air inlet of the fan, ΔT, and the current state of the charging terminal.

Optionally, turning-on of the fan is controlled based on the temperature T1 of the DC+ terminal of the charging gun, the temperature T2 of the DC- terminal of the charging gun, the temperature T5 of the air inlet of the fan, and the current state of the charging terminal; the speed of the fan is adjusted based on the temperature T1 of the DC+ terminal of the charging gun and the temperature T2 of the DC- terminal of the charging gun; and turning-off of the fan is controlled based on ΔT, the temperature T5 of the air inlet of the fan, and the current state of the charging terminal.

Optionally, when the charging terminal starts charging, max (T1, T2) ≥ 40°C, and T5 ≥ 20°C, the fan is turned on; the rotational speed of the fan is linearly adjusted based on max (T1, T2); and when the charging terminal stops charging, ΔT ≤ 1°C, and T5 ≤ 35°C, the fan is turned off.

Optionally, when T1 ≥ 50°C, the fan operates at a maximum rotational speed.

Optionally, the charging gun includes a gun tip, a cable, and a gun tail, where the cable is provided with two liquid inlet pipes and one liquid return pipe, a DC+ wire and a DC- wire are immersed and wrapped with the two liquid inlet pipes, respectively, end portions of the two liquid inlet pipes converge at the gun tip and are in communication with the liquid return pipe, and the liquid return pipe is independent of the two liquid inlet pipes.

Optionally, the gun tip is provided with two pins and end portions of the DC+ wire and the DC- wire, a crimping area being provided at each of the end portions of the DC+ wire and the DC- wire, the two pins being used to be electrically connected to the target vehicle, and the end portions of the two liquid inlet pipes passing through the two pins and the two crimping areas and then converging into the liquid return pipe; the gun tail is provided with a gun tail terminal and an adapter, the end portion of the liquid inlet pipe passing through the gun tail terminal and the adapter and being connected to the liquid inlet pipe of the cable via the adapter.

Optionally, the charging gun includes a gun tip, a cable, and a gun tail, where the cable is provided with one liquid inlet pipe and two liquid return pipes, a DC+ wire and a DC- wire are immersed in and wrapped with the two liquid return pipes, respectively, an end portion of the liquid inlet pipe is in communication with each of the two liquid return pipes at the gun tip, and the liquid inlet pipe is independent of the two liquid return pipes.

Optionally, a liquid level sensor is provided in the storage device and configured to monitor leakage of a cooling liquid in the pipeline; and a pressure sensor is provided in the pipeline and configured to monitor whether an oil path high-pressure event occurs in the pipeline.

Optionally, a relationship for T1 to T5 conforms to a formula T1 ≈ T2 ≥ T4 ≥ T3 ≥ T5, and an abnormality alarm is given when the control device receives a temperature value measured by at least one temperature sensor that is in inconformity with the formula.

Optionally, the charging terminal further includes a cabinet, where the heat dissipation device, the fan, the storage device, the conveying device and the control device are disposed inside the cabinet, and the charging gun is disposed outside the cabinet.

Optionally, the liquid inlet pipe or the liquid return pipe is connected, at the gun tail, to the pipeline inside the cabinet via a bidirectional cut-off-enabled plug assembly capable.

It can be seen from the above technical solution that the heat dissipation solution in the embodiments of the invention enables the continuous current of the charging terminal for charging the target vehicle to be greater than 600 amperes, thereby improving charging efficiency, saving charging time, and meeting the demand of a user of a new energy vehicle for fast energy replenishment by charging.

### Brief Description of the Drawings

To illustrate the technical solutions in embodiments of the invention or in the prior art more clearly, a brief introduction to the drawings required for the embodiments or the prior art will be made below. Apparently, the drawings in the following description are merely some of the embodiments of the invention, and those of ordinary skills in the art may also obtain other drawings from these drawings.
FIG. 1 is a schematic diagram of an embodiment of a charging terminal of the invention;
FIG. 2 is a schematic diagram of an embodiment of a charging gun of the invention;
FIG. 3 is a sectional view of an embodiment of a gun tip of a charging gun of the invention;
FIG. 4 is a sectional view of a cable along line B-B in FIG. 2 of the invention;
FIGS. 5A-5B are sectional views of a liquid inlet pipe and a liquid return pipe in a one-inlet two-outlet pipe distribution and a two-inlet one-outlet pipe distribution of the invention, respectively;
FIG. 6 is a sectional view of an embodiment of a gun tail of the invention; and
FIGS. 7A-7B are a perspective view and a sectional view of a bidirectional cur-off-enabled plug assembly of the invention, respectively.

### Reference signs of elements:

50: Crimping area; 60: Riveting portion; 1: Charging gun; 11: Temperature sensor at a DC+ terminal of the charging gun; 12: Temperature sensor at a DC- terminal of the charging gun; 13: Gun tip liquid-cooling module; 131: Gun tip shell; 132: DC+ plug pin; 133: DC- plug pin; 134: Intermediate clamping plate; 14: Cable; 141: Cable sheath; 142: Liquid return pipe; 143: Signal wire of the charging gun; 144: DC- wire; 145: Liquid inlet pipe; 146: DC+ wire; 15: Terminal plug; 16: DC+ gun tail liquid-cooling module; 161: Adapter; 162: Gun tail terminal; 17: DC- gun tail liquid-cooling module; 18: PE cable; 19: Signal wire plug-in terminal block; 2: Heat dissipation device; 21: Temperature sensor at an oil outlet of a gun cable; 22: Temperature sensor at an oil inlet of a gun cable; 3: Fan; 31: Temperature sensor at an air inlet of a fan; 4: Storage device; 41: Liquid level sensor; 5: Valve; 6: Conveying device; 7: Master control board; 8: Direct current power supply; 9: Pressure sensor; 151: Male plug; 152: Female plug.

### Detailed Description of Embodiments

To enable those skilled in the art to better understand the technical solutions in the embodiments of the invention, the technical solutions in the embodiments of the invention will be clearly and completely described below with reference to the drawings in the embodiments of the invention. Obviously, the described embodiments are merely some, rather than all, of the embodiments of the invention. Based on the embodiments of the invention, all other embodiments obtained by those of ordinary skill in the art shall fall within the scope of protection of the embodiments of the invention.

The "continuous current" refers to a maximum current in conformity with the national standard when the entire system reaches heat dissipation equilibrium. The "maximum current" refers to a maximum current in conformity with the national standard when the entire system, although not reaching the heat dissipation equilibrium, can implement stable charging in one charging cycle or a relatively long period of time (more than 20 min).

The specific implementations of the embodiments of the invention are further described below with reference to the drawings of the embodiments of the invention.

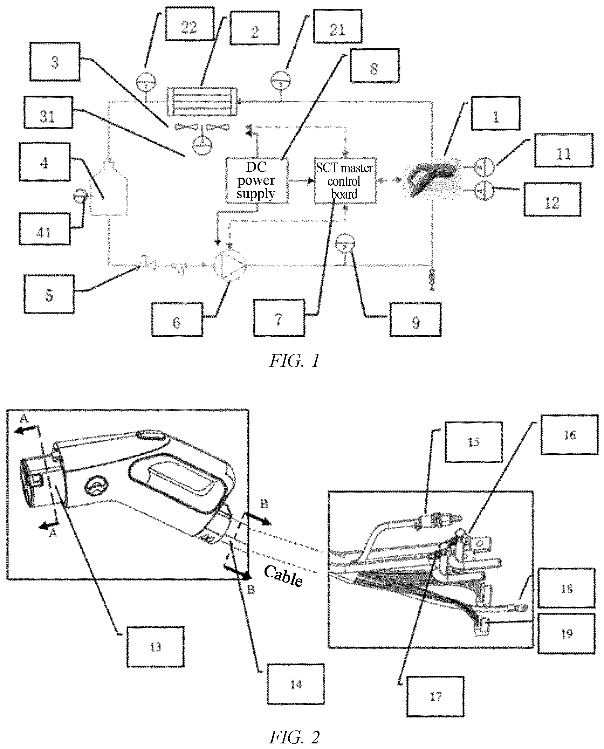

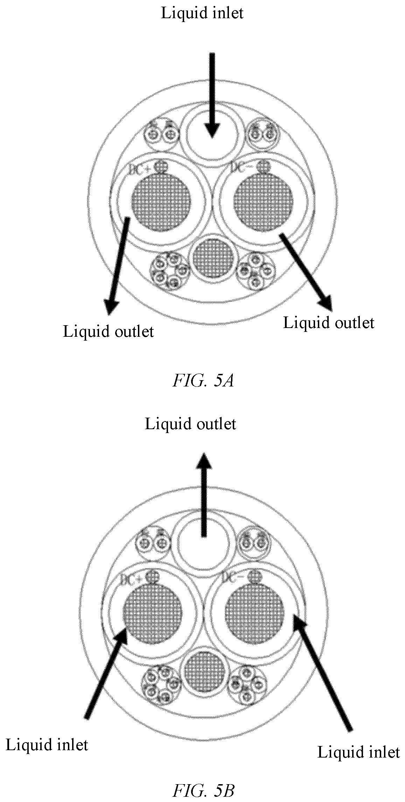

With reference to FIGS. 1-7B, in a specific implementation of the invention, there is provided a charging terminal for charging a target vehicle, the charging terminal including: a charging gun 1 provided with a liquid inlet pipe 145 and a liquid return pipe 142 therein; a heat dissipation device 2 provided with an inlet and an outlet, where the inlet is connected to the liquid return pipe 142 via a pipeline; a fan 3 electrically connected to the heat dissipation device 2; a storage device 4 connected to the outlet of the heat dissipation device 2 via a pipeline and configured to store a cooling medium; a conveying device 6 connected to the storage device 4 via a pipeline and configured to convey the cooling medium in the storage device 4 to the liquid inlet pipe 145; at least five temperature sensors disposed at a DC+ terminal of the charging gun, a DC- terminal of the charging gun, a liquid outlet of the heat dissipation device, a liquid inlet of the heat dissipation device, and an air inlet of the fan, respectively, so as to collect corresponding temperatures thereof; and a control device configured to receive data from the temperature sensors and control the operations of the conveying device and the fan, to enable the cooling medium to cool the charging gun, so that a continuous current of the charging terminal for charging the target vehicle is greater than 600 amperes, thereby improving charging efficiency, saving charging time, and meeting the demands of a user of a new energy vehicle for fast energy replenishment by charging.

The cooling medium includes an oily liquid, an aqueous ethylene glycol solution, a fluorinated liquid, air, etc., and in an embodiment of the invention, the cooling medium is an oily liquid. The conveying device 6 conveys the cooling medium in the storage device 4. The cooling medium enters the charging gun 1 through the liquid inlet pipe 145, undergoes a temperature rise after dissipating heat from the charging gun 1, then exits the liquid return pipe 142, and enters the heat dissipation device 2. The fan 3 and the heat dissipation device 2 jointly dissipate the heat and reduce the temperature of the cooling medium, and the cooling medium then enters the storage device 4.

In an embodiment of the invention, a maximum current of the charging terminal for charging the target vehicle is greater than 650 amperes.

The heat dissipation device 2 may be a finned heat exchanger, a plate heat exchanger, a shell-and-tube heat exchanger, etc. In an embodiment of the invention, the heat dissipation device 2 is an aluminum plate finned heat exchanger with a compact structure, a reduced weight, a small size and high heat transfer efficiency, and cooperates with the fan 3, resulting in an improved heat dissipation capacity.

The conveying device 6 may be a pump or other devices capable of conveying a medium. In an embodiment of the invention, the charging terminal further includes a cabinet, where the heat dissipation device 2, the fan 3, the storage device 4, the conveying device 6 and the control device are disposed inside the cabinet, and the charging gun 1 is disposed outside the cabinet. One or more of the heat dissipation device 2, the fan 3, the storage device 4, the conveying device 6 and the control device may also be disposed outside the cabinet, to achieve heat dissipation for a gun cable and a terminal cabinet system by means of liquid-liquid heat exchange. A valve 5 may be provided between the conveying device 6 and the storage device 4.

In an embodiment of the invention, the control device includes a master control board 7, and the charging terminal includes five temperature sensors, where the master control board 7 receives data from the five temperature sensors and controls the operations of the conveying device 6 and the fan 3 based on the data or the data and a current state of the charging terminal. The master control board 7 may be an SCT master control board that is electrically connected to each of the conveying device 6 and the fan 3. A direct current power supply 8 may supply power to each of the master control board 7, the fan 3, the conveying device 6, the temperature sensors, etc.

In an embodiment of the invention, the charging terminal further includes five temperature sensors (a temperature sensor 11 at a DC+ terminal of the charging gun, a temperature sensor 12 at a DC- terminal of the charging gun, a temperature sensor 22 at an oil inlet of the gun cable, a temperature sensor 21 at an oil outlet of the gun cable, and a temperature sensor 31 at the air inlet of the fan 3), which are disposed at the DC+ terminal of the charging gun, the DC- terminal of the charging gun, the liquid outlet of the heat dissipation device 2, the liquid inlet of the heat dissipation device 2, and the air inlet of the fan 3, respectively, and configured to measure a temperature T1 of the DC+ terminal of the charging gun, a temperature T2 of the DC- terminal of the charging gun, a temperature T3 of the oil inlet of the gun cable, a temperature T4 of the oil outlet of the gun cable, and a temperature T5 of the air inlet of the fan 3, respectively. In an optional embodiment, the conveying device 6 is a pump, and the operation of the pump is controlled based on ΔT and/or the current operating state of the charging terminal, where ΔT = T4 - T3. The current operating state of the charging terminal includes starting charging, stopping charging, etc. In an embodiment, when the charging terminal starts charging, the pump is controlled to be turned on; and when the charging terminal stops charging and ΔT ≤ 1°C, the pump is controlled to be turned off. A rotational speed of the pump may be divided into three levels in an ascending order, where a first level is 2000 rpm, i.e., 17% of a duty cycle; a second level is 2500 rpm, i.e., 22% of a duty cycle; and a third level is 3000 rpm, i.e., 27% of a duty cycle. When the rotational speed of the pump is at the first level and ΔT ≥ 7°C, the rotational speed of the pump is increased to the second level; and when ΔT ≥ 12°C, the rotational speed of the pump is increased to the third level. In contrast, when the rotational speed of the pump is at the third level and ΔT < 12°C, the rotational speed of the pump is reduced to the second level; and when the rotational speed of the pump is at the second level and ΔT < 7°C, the rotational speed of the pump is reduced to the first level.

In an embodiment, the operation of the fan 3 is controlled based on the temperature T1 of the DC+ terminal of the charging gun, the temperature T2 of the DC- terminal of the charging gun, the temperature T5 of the air inlet of the fan 3, ΔT, and the current state of the charging terminal. As an optional embodiment, turning-on of the fan 3 is controlled based on the temperature T1 of the DC+ terminal of the charging gun, the temperature T2 of the DC- terminal of the charging gun, the temperature T5 of the air inlet of the fan 3 and the current state of the charging terminal. For example, when the charging terminal starts charging, a maximum value max (T1, T2) of T1 and T2 ≥ 40°C and T5 ≥ 20°C, the fan 3 is turned on. The speed of the fan 3 is adjusted based on the temperature T1 of the DC+ terminal of the charging gun and the temperature T2 of the DC- terminal of the charging gun. For example, the rotational speed of the fan 3 is linearly adjusted based on max (T1, T2), that is, if the numerical value of max (T1, T2) becomes larger, the rotational speed of the fan 3 is adjusted to be higher; and if the numerical value of max (T1, T2) becomes smaller, the rotational speed of the fan 3 is adjusted to be lower. For another example, when T1 ≥ 50°C, the fan 3 operates at a maximum rotational speed, that is, the fan 3 operates at the highest level. Turning-off of the fan 3 is controlled based on ΔT, the temperature T5 of the air inlet of the fan 3 and the current state of the charging terminal. For example, when the charging terminal stops charging, ΔT ≤ 1°C, and T5 ≤ 35°C, the fan 3 is turned off.

In the invention, the temperature sensors are arranged at five temperature acquisition points, and under the control of a logic algorithm of the SCT master control board 7, output rotational speeds of key liquid cooling components such as the fan 3 and a water pump are precisely set to achieve precise real-time dynamic adjustment of the liquid cooling heat dissipation system, resulting in an equilibrium between liquid cooling and noise.

In an embodiment, a liquid level sensor 41 is provided in the storage device 4 and configured to monitor the leakage of a cooling liquid in the pipeline; and a pressure sensor 9 is provided in the pipeline and configured to monitor whether an oil path high-pressure event occurs in the pipeline. The liquid level sensor 41, the pressure sensor 9 and the logic control of the SCT master control board 7 ensure the safety performance of the charging terminal in various scenarios of failure such as leakage of the cooling liquid, and blocking, overbending and damage of a cooling pipeline.

With reference to FIGS. 2-3, in an embodiment, the charging gun 1 includes a gun tip, a cable 14, and a gun tail, where the cable 14 is connected to each of the gun tip and the gun tail, and the gun tip and the gun tail are provided with a gun tip liquid-cooling module 13 and a gun tail liquid-cooling module, respectively.

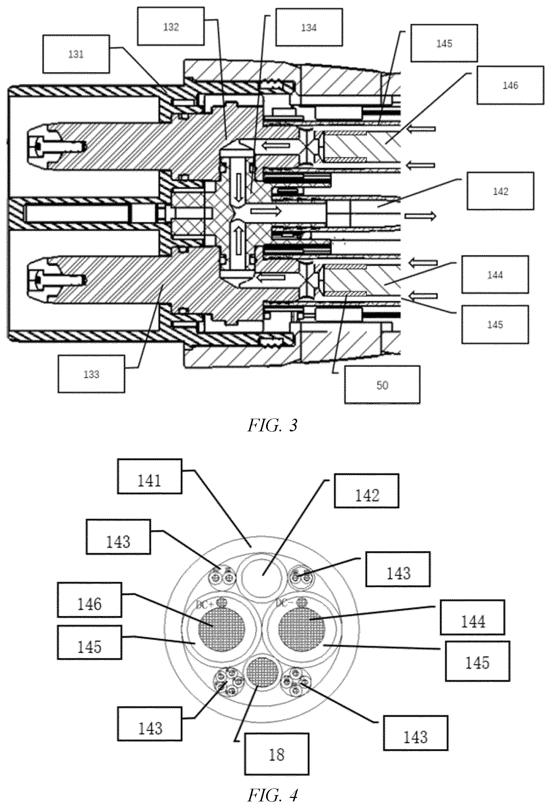

With reference to FIGS. 4-5B, in an embodiment, the cable 14 is provided with two liquid inlet pipes 145 and one liquid return pipe 142 ("two-inlet one-outlet" for short), where a DC+ wire 146 and a DC- wire 144 are immersed in and wrapped with the two liquid inlet pipes 145, respectively, end portions of the two liquid inlet pipes 145 converge at the gun tip and are in communication with the liquid return pipe 142, and the liquid return pipe 142 is independent of the two liquid inlet pipes 145. The liquid return pipe 142 is also in communication with the heat dissipation device 2 to introduce the warmed-up cooling medium to the heat dissipation device 2. The cable 14 further includes a cable sheath 141, a charging gun signal wire 143, the DC+ wire 146, the DC- wire 144, and a PE cable 18. The DC+ wire 146 and the DC- wire 144 may both be bare copper wires and are composed of multiple harnesses. In another embodiment, alternatively, the cable 14 may be provided with one liquid inlet pipe 145 and two liquid return pipes 142 ("one-inlet two-outlet" for short), where the DC+ wire 146 and the DC- wire 144 are immersed in and wrapped with the two liquid return pipes 142, respectively, an end portion of the liquid inlet pipe 145 is in communication with each of the two liquid return pipes 142 at the gun tip, and the liquid inlet pipe 145 is independent of the two liquid return pipes 142. Compared with the two-inlet one-outlet pipe arrangement, the cooling medium in the one-inlet two-outlet pipe arrangement brings out more heat, so that the cable sheath 141 dissipates less heat. From the perspective of user experience (the temperature of the gun tip, and the temperature of the gun cable sheath), the one-inlet two-outlet pipe arrangement is more conducive to the heat dissipation from the charging gun 1, since a portion thereof likely coming into contact with a user has a lower temperature, resulting in improved user experience. Moreover, the cable 14 maintained at a lower temperature is more conducive to long-lasting use of the gun cable, resulting in improved durability.

The gun tip liquid-cooling module 13 is provided with a gun tip shell 131, two pins (a DC+ plug pin 132 and a DC- plug pin 133), an intermediate clamping plate 134, etc. A crimping area 50 is provided at each of end portions of the DC+ wire 146 and the DC- wire 144, and the two pins are used to be electrically connected to a target vehicle. In an example of the two-inlet one-outlet pipe arrangement, the end portions of the two liquid inlet pipes 145 separately pass through the crimping areas 50, the two pins, and the intermediate clamping plate 134 and then converge into the liquid return pipe 142. Each liquid inlet pipe 145 carries away the heat generated by crimping resistance of the crimping areas 50 and part of the heat generated by the pins, to ensure that a temperature rise there is not excessively high. In addition to a crimping process, riveting, welding, screwing, etc. may be used for the crimping areas 50.

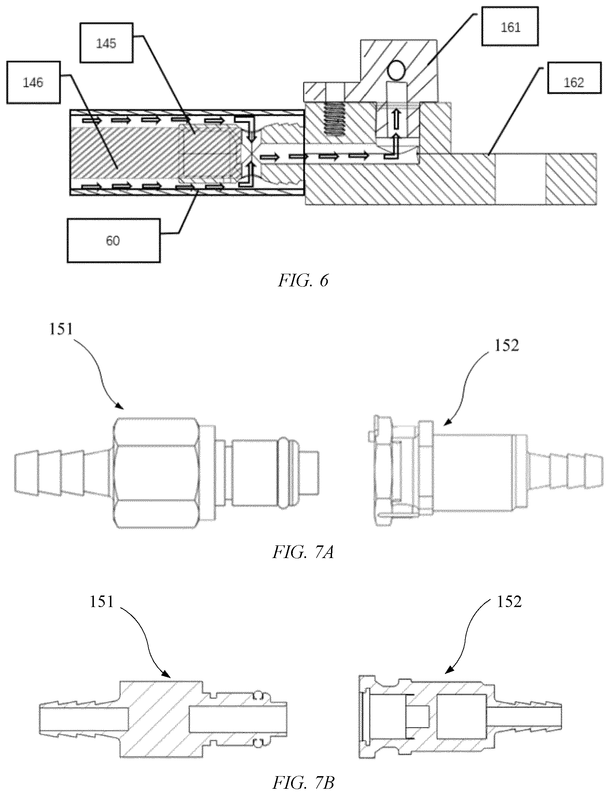

With reference to FIG. 6, in an embodiment, the gun tail liquid-cooling module includes a DC+ gun tail liquid-cooling module 16 and a DC-gun tail liquid-cooling module 17, where the DC+ gun tail liquid-cooling module 16 is provided with a gun tail terminal 162, the end portion of the liquid inlet pipe 145, and an adapter 161. The gun tail terminal 162 may be a copper busbar terminal. One end of the end portion of the liquid inlet pipe 145 is connected to the conveying device 6, and the other end thereof passes through the gun tail terminal 162 and the adapter 161 and then is in communication with the liquid inlet pipe 145 of the cable 14 via the adapter 161. The gun tail terminal 162 is provided with a riveting portion 60. The cooling medium carries away heat from the riveting portion 60 of the gun tail terminal 162, and also carries away part of heat from the gun tail terminal 162 itself, to implement the heat dissipation from the gun tail, thereby ensuring that a temperature rise there is not excessively high. Furthermore, to avoid a potential risk of an excessively high temperature at the gun tail, an additional temperature sensor may be arranged in the cabinet to implement monitoring and thermal management in a potential high-temperature area. In addition to a riveting process, welding, screwing, etc. may be used for the crimping portion 60.

The gun tail may also be provided with a signal wire plug-in terminal block 19, which may be a 16-pin terminal for outputting a variety of signals, and the PE cable 18 is grounded.

In an embodiment, a relationship for T1 to T5 conforms to the formula T1 ≈ T2 ≥ T4 ≥ T3 ≥ T5, where it may be said that T1 ≈ T2 when a temperature difference between T1 and T2 ≤ 5°C. When the master control board 7 receives a temperature value measured by at least one temperature sensor that is in inconformity with the formula, it indicates that the temperature sensor is abnormal, and an abnormality alarm is given. For example, if T1 < T4, one of the temperature sensor at the DC+ terminal of the charging gun or the temperature sensor at the oil outlet of the gun cable necessarily fails due to damage.

In an embodiment, the liquid inlet pipe 145 or the liquid return pipe 142 is connected, at the gun tail, to the pipeline inside the cabinet via a bidirectional cut-off-enabled plug assembly. As shown in FIGS. 7A-7B, the bidirectional cut-off-enabled plug assembly includes a male plug 151 and a female plug 152, where one end of each of the male plug 151 and the female plug 152 is socketed to the liquid inlet pipe 145 or the liquid return pipe 142 or the pipeline inside the cabinet, and the other ends thereof are plugged into each other. When the male plug 151 and the female plug 152 are plugged into each other, the male plug 151 and the female plug 152 are in communication with each other for the cooling medium to pass through; and when the male plug 151 and the female plug 152 are released from each other, the male plug 151 and the female plug 152 are both cut off to prevent the cooling medium from flowing out. As shown in FIG. 2, the liquid return pipe 142 is interfaced, via a terminal plug 15 (a male plug or a female plug) at the gun tail, with a terminal plug (a female plug or a male plug) provided on the pipeline inside the cabinet, to form the bidirectional cut-off-enabled plug assembly. In the embodiment of the invention, the bidirectional cut-off-enabled plug assembly, in replacement of a hoop commonly used in the industry, may implement fast pluggable fitting between a liquid cooling pipe of the charging gun 1 and a liquid cooling pipe inside the cabinet. In another embodiment, a one-way stop valve may be used in combination with other measures to implement fast connection of the gun tail and the pipeline inside the cabinet.

A performance test was performed on the charging terminal of an embodiment of the invention with a continuous charging current of 600 amperes and charging time of 30 min, where the test conditions were as follows: the cooling liquid being dimethyl silicone oil, the temperature T3 of the oil inlet of the gun cable in an initial state being 25°C, a liquid flow rate in the pipe being 4 L/min, and the pipes being in the one-inlet two-outlet arrangement. The test results are shown in the following table, where thermal equilibrium is achieved 25 min after a peak of the temperature of the gun cable, a maximum temperature rise and a maximum temperature conform to the standard, temperatures at four points of the cable sheath (the four points obtained by evenly dividing the length of the gun cable) are all below 60°C, and a temperature rise of the gun cable terminal is below 50°C, that is, the charging performance test is in line with the national standard. That is, the charging terminal meets the requirement for a temperature rise during 600-ampere continuous charging.

| | Gu n tip plu g-i n po siti on D C+ | Gu n tip plu g-in pos itio n DC - | Gu n tip cri mp ing pos itio n DC + | Gu n tip cri mpi ng posi tion DC - | Cab le shea th ① | Ca ble she ath ② | Cab le she ath ③ | Cab le she ath ⑤ | Gu n tail cri mpi ng posi tion DC + | Gu n tail cri mpi ng posi tion DC - | Gu n tail co nn ect ion po siti on D C+ | Gu n tail co nn ect ion po siti on D C- | Am bie nt | Oil inle t pip e of an oil pu mp | Oil out let pip e of an oil pu mp |
|---|---|---|---|---|---|---|---|---|---|---|---|---|---|---|---|
| Temp eratur e at 0 min | 27. 52 | 27. 58 | 27. 5 | 27. 5 | 27.5 5 | 27. 5 | 27. 54 | 27. 6 | 27. 5 | 27. 73 | 27. 59 | 27. 56 | 27. 56 | 27. 79 | 27. 67 |
| Temp eratur e at 30 min | 50. 47 | 49. 8 | 43. 23 | 42. 6 | 38.9 1 | 48. 94 | 42. 79 | 54. 48 | 54. 29 | 57. 89 | 69. 36 | 69. 43 | 29. 01 | 56. 24 | 44. 05 |
| Temp eratur e rise | 22. 95 | 22. 22 | 15. 73 | 15. 1 | 11.3 6 | 21. 44 | 15. 25 | 26. 88 | 26. 79 | 30. 16 | 41. 77 | 41. 87 | 1.4 5 | 28. 45 | 16. 38 |

Finally, it should be noted that, the foregoing embodiments are merely used for illustrating rather than limiting the technical solutions of the embodiments of the invention. Although the invention has been illustrated in detail with reference to the foregoing embodiments, it should be understood by those of ordinary skill in the art that the technical solutions described in the foregoing embodiments may still be modified, or some of the technical features therein may be equivalently substituted, but these modifications or substitutions do not make the essence of corresponding technical solutions depart from the spirit and scope of the technical solutions of the embodiments of the invention.

## Claims

1. A charging terminal for charging a target vehicle, the charging terminal comprising:
a charging gun provided with a liquid inlet pipe and a liquid return pipe therein;
a heat dissipation device provided with an inlet and an outlet, wherein the inlet is connected to the liquid return pipe via a pipeline;
a fan electrically connected to the heat dissipation device;
a storage device connected to the outlet of the heat dissipation device via a pipeline and configured to store a cooling medium;
a conveying device connected to the storage device via a pipeline and configured to convey the cooling medium in the storage device to the liquid inlet pipe;
at least five temperature sensors disposed at a DC+ terminal of the charging gun, a DC- terminal of the charging gun, a liquid outlet of the heat dissipation device, a liquid inlet of the heat dissipation device, and an air inlet of the fan, respectively; and
a control device configured to receive data from the temperature sensors and control the operations of the conveying device and the fan, to enable the cooling medium to cool the charging gun, so that a continuous current of the charging terminal for charging the target vehicle is greater than 600 amperes.

2. The charging terminal according to claim 1, wherein a maximum current of the charging terminal for charging the target vehicle is greater than 650 amperes.

3. The charging terminal according to claim 1, wherein the temperature sensors are configured to measure a temperature T1 of the DC+ terminal of the charging gun, a temperature T2 of the DC- terminal of the charging gun, a temperature T3 of an oil inlet of a gun cable, a temperature T4 of an oil outlet of the gun cable, and a temperature T5 of the air inlet of the fan, respectively, and the operation of the conveying device is controlled based on ΔT and/or a current operating state of the charging terminal, wherein ΔT = T4 - T3.

4. The charging terminal according to claim 3, wherein when the charging terminal starts charging, the conveying device is controlled to be turned on; and when the charging terminal stops charging and ΔT ≤ 1°C, the conveying device is controlled to be turned off.

5. The charging terminal according to claim 4, wherein the conveying device is a pump, a rotational speed of the pump is divided into three levels in an ascending order, and when the rotational speed of the pump is at a first level and ΔT ≥ 7°C, the rotational speed of the pump is increased to a second level; and when ΔT ≥ 12°C, the rotational speed of the pump is increased to the third level; and vice versa.

6. The charging terminal according to claim 3, wherein the operation of the fan is controlled based on the temperature T1 of the DC+ terminal of the charging gun, the temperature T2 of the DC- terminal of the charging gun, the temperature T5 of the air inlet of the fan, ΔT, and the current state of the charging terminal.

7. The charging terminal according to claim 6, wherein turning-on of the fan is controlled based on the temperature T1 of the DC+ terminal of the charging gun, the temperature T2 of the DC- terminal of the charging gun, the temperature T5 of the air inlet of the fan, and the current state of the charging terminal; the speed of the fan is adjusted based on the temperature T1 of the DC+ terminal of the charging gun and the temperature T2 of the DC- terminal of the charging gun; and turning-off of the fan is controlled based on ΔT, the temperature T5 of the air inlet of the fan, and the current state of the charging terminal.

8. The charging terminal according to claim 7, wherein when the charging terminal starts charging, max (T1, T2) ≥ 40°C, and T5 ≥ 20°C, the fan is turned on; the rotational speed of the fan is linearly adjusted based on max (T1, T2); and when the charging terminal stops charging, ΔT ≤ 1°C, and T5 ≤ 35°C, the fan is turned off.

9. The charging terminal according to claim 8, wherein when T1 ≥ 50°C, the fan operates at a maximum rotational speed.

10. The charging terminal according to claim 1, wherein the charging gun comprises a gun tip, a cable, and a gun tail, wherein the cable is provided with two liquid inlet pipes and one liquid return pipe, a DC+ wire and a DC- wire are immersed in and wrapped with the two liquid inlet pipes, respectively, end portions of the two liquid inlet pipes converge at the gun tip and are in communication with the liquid return pipe, and the liquid return pipe is independent of the two liquid inlet pipes.

11. The charging terminal according to claim 10, wherein the gun tip is provided with two pins and end portions of the DC+ wire and the DC- wire, a crimping area being provided at each of the end portions of the DC+ wire and the DC- wire, the two pins being used to be electrically connected to the target vehicle, and the end portions of the two liquid inlet pipes passing through the two pins and the two crimping areas and then converging into the liquid return pipe; and the gun tail is provided with a gun tail terminal and an adapter, the end portion of the liquid inlet pipe passing through the gun tail terminal and the adapter and being connected to the liquid inlet pipe of the cable via the adapter.

12. The charging terminal according to claim 1, wherein the charging gun comprises a gun tip, a cable, and a gun tail, wherein the cable is provided with one liquid inlet pipe and two liquid return pipes, a DC+ wire and a DC- wire are immersed in and wrapped with the two liquid return pipes, respectively, an end portion of the liquid inlet pipe is in communication with each of the two liquid return pipes at the gun tip, and the liquid inlet pipe is independent of the two liquid return pipes.

13. The charging terminal according to claim 3, wherein a liquid level sensor is provided in the storage device and configured to monitor leakage of a cooling liquid in the pipeline; and a pressure sensor is provided in the pipeline and configured to monitor whether an oil path high-pressure event occurs in the pipeline.

14. The charging terminal according to claim 3, wherein a relationship for T1 to T5 conforms to the formula T1 ≈ T2 ≥ T4 ≥ T3 ≥ T5, and an abnormality alarm is given when the control device receives a temperature value measured by at least one temperature sensor that is in inconformity with the formula.

15. The charging terminal according to claim 10 or 12, further comprising a cabinet, wherein the heat dissipation device, the fan, the storage device, the conveying device and the control device are disposed inside the cabinet, and the charging gun is disposed outside the cabinet.

16. The charging terminal according to claim 15, wherein the liquid inlet pipe or the liquid return pipe is connected, at the gun tail, to the pipeline inside the cabinet via a bidirectional cut-off-enabled plug assembly.
